Europäisches Patentamt

European Patent Office

Office européen des brevets

(19)

(11) Publication number: **0 038 588**
**B1**

(12) **EUROPEAN PATENT SPECIFICATION**

(45) Date of publication of patent specification: **07.03.84**

(51) Int. Cl.³: **F 17 C 3/06**

(21) Application number: **81200369.7**

(22) Date of filing: **02.04.81**

(54) A heat-insulated container for liquefied gases.

(30) Priority: **21.04.80 GB 8013007**

(43) Date of publication of application:
**28.10.81 Bulletin 81/43**

(45) Publication of the grant of the patent:
**07.03.84 Bulletin 84/10**

(84) Designated Contracting States:
**DE FR GB IT NL SE**

(56) References cited:
**FR - A - 2 206 292**
**GB - A - 1 444 310**
**GB - A - 1 453 297**
**GB - A - 1 516 150**
**US - A - 3 993 213**

(73) Proprietor: **SHELL INTERNATIONALE RESEARCH
MAATSCHAPPIJ B.V.**
**Carel van Bylandtlaan 30**
**NL-2596 HR Den Haag (NL)**

(72) Inventor: **Collins, Michael Harry**
**Maes Derw Main Road**
**Huxley, Nr. Chester Cheshire (GB)**

(74) Representative: **Puister, Antonius Tonnis, Mr. et al,**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A heat-insulated container for liquefied gases

The invention relates to a heat-insulated container for storage or transport of liquefied gases, comprising a rigid outer shell and a heat-insulating lining of rigid polyurethane foam arranged along the inner side of the rigid outer shell.

Containers of this kind are known, wherein the heat-insulating lining is of such a quality that it is adapted to be in direct contact with the liquefied gas stored in the container.

When it is desired to store liquefied gases, for example, at temperatures lower than minus 60°C, it is necessary to provide at least the inner surface of the heat-insulating lining with a porous reinforcement laminate, in order to inhibit the formation of cracks in the heat-insulating lining.

It is an object of the invention to provide a reinforcement laminate for use in a container of the above kind, which reinforcement laminate is of a special construction so that it can be easily applied to the heat-insulating lining and so that it combines high stiffness with high porosity at the service conditions.

For this purpose, a heat-insulated container for storage or transport of liquefied gases comprising a rigid outer shell a heat-insulating lining of rigid polyurethane foam arranged along the inner side of the rigid outer shell, and a porous reinforcement laminate provided at least on the inner surface of the heat-insulating lining, wherein said porous reinforcement laminate comprises, according to the invention, a cured epoxy resin formulation and at least two plies of woven cloth of glass-fibre material laid on top of each other, which plies differ as to mesh size and thread thickness in such a manner that the plies cannot nest when laid on top of each other.

The invention will be described more in detail with reference to the accompanying drawings, wherein:

Figure 1 shows schematically a vertical cross-section of a heat-insulated container provided with a reinforcement laminate according to the invention.

Figure 2 shows schematically in detail a cross-section of part of the heat-insulating lining of the container according to Figure 1, provided with an embodiment of a reinforcement laminate according to the invention.

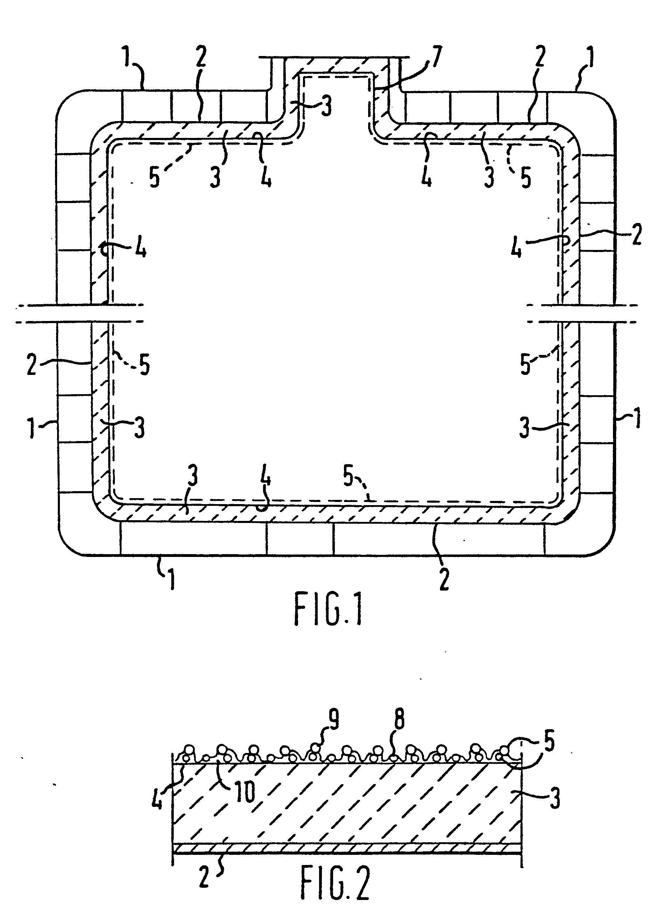

In Figure 1, the steel outer hull of a ship for transporting liquefied gas is indicated by the reference numeral 1, whereas the steel inner hull of the ship is indicated by the reference numeral 2. The inner hull 2, connected to the outer hull 1 in conventional manner, forms the rigid outer shell of a container for liquefied gas. The said rigid outer shell 2 is provided with a heat-insulating lining 3 of rigid polyurethane foam. The top of the container is provided with a heat-insulated dome 7.

In containers of this kind, the liquefied gas is normally in direct contact with the heat-insulating lining 3. However, when the temperature of the liquefied gas to be stored is very low, for example lower than minus 60°C, it is necessary to provide the inner surface 4 of the heat-insulating lining 3 with a reinforcement laminate 5, comprising a cured epoxy resin formulation and a glass-fibre material. The purpose of the laminate 5 is to arrest cracks in the polyurethane foam and to inhibit the formation of cracks at the inner surface 4 of the heat-insulating lining 3 during the filling of the container with liquefied gas, when the container is cooled down from ambient temperature to the very low temperature of the liquefied gas to be stored in the container. In the case of storage of liquefied natural gas at about atmospheric pressure, this temperature is as low as about minus 160°C.

This reinforcement laminate must be sufficiently stiff to perform its function as a crack inhibitor and as a crack arrester properly. Furthermore, the reinforcement laminate must have a high degree of porosity. During normal use of the container, some liquefied gas will penetrate through the reinforcement laminate and will collect behind the reinforcement laminate. When at a later stage the liquefied gas is removed from the container, so that the temperature of the container rises to ambient temperature, the liquefied gas collected behind the reinforcement laminate will evaporate rapidly. If the reinforcement laminate is not sufficiently porous, the evaporated gas cannot escape quickly through the pores of the laminate, so that the pressure of the gas behind the laminate rises to a high value. This high back pressure may destroy the reinforcement laminate.

In order to obtain the necessary stiffness of the laminate one could use in theory a single thick and coarse ply of woven cloth of glass-fibre material. Such a thick and coarse ply would, however, be too heavy to handle and when used on the side- or top walls of the container, it would fall off from the heat-insulating lining during the wet stage of the epoxy resin. The required stiffness of the reinforcement laminate could also be obtained by using a plurality of thin and fine plies of woven cloth of glass-fibre material laid on top of each other. It has been found, however, that in that case it is very difficult to obtain a laminate of sufficient porosity.

Consequently, it is necessary to compromise in order to obtain:

a. a laminate having a high stiffness,
b. a laminate having a high porosity,
c. a laminate which can be applied at low cost to the heat-insulating lining without great difficulties.

Serious investigations and tests have revealed that the above problem can be solved in a satisfactory manner by using a reinforcement laminate comprising a cured epoxy resin formulation and at least two plies of woven cloth of glass-fibre material laid on top of each other, which plies differ as to mesh size and thread thickness in such a manner that the plies cannot nest when laid on top of each other.

In Figure 2 an embodiment of the reinforcement laminate 5 according to the invention is shown. This laminate 5 comprises a thin and fine ply 8 of woven cloth of glass-fibre material secured to the inner surface 4 of the heat-insulating lining 3 by means of a cured epoxy resin formulation 10 and a somewhat thicker and coarser ply 9 of woven cloth of glass-fibre material laid on top of the ply 8 and secured thereto by means of a cured epoxy resin formulation 10. The plies 8 and 9 differ as to mesh size and thread thickness in such a manner that the plies 8 and 9 cannot nest. The glass content of the reinforcement laminate 5 is in the range of from 40 to 65% w/w.

Plies of a plain weave construction can be used, for example, for ply 8 can be used woven cloth of glass-fibre material having a nominal thickness of 0.36 mm, a nominal weight of 332 g/m², 3.9 warp threads/10 mm and 3.9 weft threads/10 mm, and for ply 9 can be used a woven cloth of glass-fibre material having a nominal thickness of 0.74 mm, a nominal weight of 386 g/m², 2.8 warp threads/10 mm and 2.8 weft threads/10 mm. The glass cloth used for ply 8 is, for example, glass-cloth type Y 384 and glass cloth used for ply 9 is, for example, glass cloth type Y 961, both marketed by Fothergill and Harvey, Littleborough, Lancashire, England, by other manufacturers offer identical glass cloths but under other code names. These glass cloths are made to a British Standard Specification.

It is observed that instead of plies of plain weave construction, it is possible to use plies of interlocked weave construction, for example, leno, mock leno or lograft.

An embodiment of the reinforcement laminate according to the invention is manufactured in the following manner:

1. To the clean sanded, smooth and skin-free surface 4 of the heat-insulating lining of rigid polyurethane foam, a quantity of 320 g/m² of an epoxy resin mixture is applied as evenly as possible by using a roller or by spraying.
2. One ply of glass cloth type Y 384 is laid into the wet epoxy resin mixture. Air bubbles are smoothed out.

3. The glass cloth is then rolled with a split washer roller or a finned roller to wet out the glass cloth and to contact the glass cloth with the polyurethane foam surface 4.
4. A quantity of 60 g/m² of epoxy resin mixture is applied to the glass cloth to cover any dry spots and to even the epoxy resin distribution.
5. The glass cloth is rolled again with a split washer roller or a finned roller to complete wet out and to contact the glass cloth with the surface 4 of the polyurethane foam.
6. A quantity of 100 g/m² of epoxy resin mixture is applied to the first ply of glass cloth.
7. One ply of glass cloth type Y 961 is laid into the wet or gelled epoxy resin mixture. Air bubbles are smoothed out.
8. The glass cloth is compacted with a split washer roller or a finned roller.
9. A quantity of 80 g/m² of epoxy resin mixture is applied to the glass cloth to cover any dry spots and to even the resin distribution.
10. The laminate is finely compacted by means of a split washer roller or a finned roller.
11. The epoxy resin mixture is allowed to cure.

When the temperature of the liquefied gas is very low, more in particular when the temperature of the liquefied gas is lower than about minus 60°C, the reinforcement laminate 5 is always required on the inner surface 4 of the heat-insulating lining 3, but in some cases, depending on the design, such a reinforcement laminate may also be required within the heat-insulating lining 3 at some distance from the inner surface 4. The manufacture of the last-mentioned reinforcement laminate is similar to the manufacture of the reinforcement laminate 5 on the inner surface 4 of the heat-insulating lining, the only difference being that further layers of polyurethane foam are sprayed onto the reinforcement laminate after it has been applied. The reinforcement laminate arranged within the heat-insulating lining 3 acts both as a crack inhibitor and as a crack arrester.

A suitable epoxy resin formulation for use in the invention is described in the following example:

| Material | Parts by weight |
|---|---|
| Epoxy resin: EPIKOTE 828 | 100 |
| Flexibilizer: flexibilizer 151 | 50 |
| Thixotropic agent: aerosil 380 | 5 |
| Curing agent: a modified cycloaliphatic amine | 46 |

EPIKOTE 828 is a glycidyl polyether of 2,2-bis(4-hydroxyphenyl) propane having an epoxy equivalent weight of 182—194 and a viscosity of 100—150 poises at 25°C. EPIKOTE is a registered trade mark.

Flexibilizer 151 is a flexibilizing epoxy resin component having an epoxy equivalent weight of 700.

It is observed that the invention can be applied to containers without a so-called inner tank as described in the above. However, instead it can be applied as well to containers provided with an inner tank (normally made of a suitable metal), wherein the liquefied gas is only in direct contact with the insulation in case of failure and leakage of the inner tank.

## Claims

1. A heat-insulated container for storage or transport of liquefied gases comprising a rigid outer shell (2), a heat-insulating lining (3) of rigid polyurethane foam arranged along the inner side of the rigid outer shell (2), and a porous reinforcement laminate (5) provided at least on the inner surface (4) of the heat-insulating lining (3), characterized in that said porous reinforcement laminate (5) comprises a cured epoxy resin formulation (10) and at least two plies (8, 9) of woven cloth of glass-fibre material laid on top of each other, which plies differ as to mesh size and thread thickness in such a manner that the plies cannot nest when laid on top of each other.

2. The container as claimed in claim 1, wherein the glass content of the reinforcement laminate (5) is in the range of from 40 to 65% w/w.

3. The container as claimed in any one of the claims 1 to 2, wherein the plies (8, 9) of woven cloth of glass-fibre material are of a plain weave construction.

4. The container as claimed in claim 3, wherein one ply (8) of woven cloth of glass-fibre material has a nominal thickness of 0.36 mm, a nominal weight of 332 g/m², 3.9 warp threads/10 mm and 3.9 weft threads/10 mm and wherein an adjacent ply (9) of woven cloth of glass-fibre material has a nominal thickness of 0.74 mm, a nominal weight of 386 g/m², 2.8 warp threads/10 mm and 2.8 weft threads/10 mm.

## Revendications

1. Un réservoir isolé contre la chaleur pour le stockage ou le transport de gaz liquéfiés comprenant une enveloppe extérieure rigide (2), un revêtement thermiquement isolant (3) de mousse rigide de polyuréthane disposé le long du côté intérieure de · l'enveloppe extérieure rigide (2) et un stratifié de renforcement poreux (5) présent sur au moins la surface intérieure (4) du revêtement thermiquement isolant (3), caractérisé en ce que le stratifié de renforcement poreux (5) comprend une composition de résine époxy durcie (10) et au moins deux couches (8, 9) de tissu de fibre de verre déposées l'une sur l'autre, ces couches étant différentes en ce qui concerne la dimension des mailles et l'épaisseur des fils de façon que les couches ne puissent pas s'emboîter quand elles sont déposées l'une sur l'autre.

2. Un réservoir selon la revendication 1, dans lequel la teneur en verre du stratifié de renforcement (5) est comprise entre 40 et 65% en poids.

3. Un réservoir selon l'une quelconque des revendications 1 et 2, dans lequel les couches (8, 9) de tissue de fibre de verre sont d'une construction à armure toile.

4. Un réservoir selon la revendication 3, dans lequel une couche (8) de tissue de fibre de verre a une épaisseur nominale de 0,36 mm, un poids nominal de 332 g/m², 3,9 fils de chaîne/10 mm et 3,9 fils de trame/10 mm et une couche adjacent (9) de tissu de fibre de verre a une épaisseur nominale de 0,74 mm, un poids nominal de 386 g/m², 2,8 fils de chaîne/10 mm et 2,8 fils de trame/10 mm.

## Patentansprüche

1. Wärmeisolierter Behälter zum Lagern oder Transportieren von Flüssiggas, bestehend aus einem starren Mantel (2), einer wärmeisolierenden Auskleidung (3) aus Polyurethan-Hartschaumstoff, die auf der Innenseite des Mantels (2) angeordnet ist, sowie einem porösen verstärkenden Laminat (5), das mindestens auf der Innenfläche (4) der wärmeisolierenden Auskleidung (3) angeordnet ist, dadurch gekennzeichnet, daß das poröse verstärkende Laminat (5) eine gehärtete Epoxyharzmasse (10) und mindestens zwei übereinander gelegte Lagen (8, 9) aus Glasfasergewebe umfaßt, die sich hinsichtlich Maschengröße und Fadenstärke so unterscheiden, daß die Lagen nicht ineinander greifen können, wenn sie übereinander gelegt sind.

2. Behälter nach Anspruch 1, dadurch gekennzeichnet, daß der Glasgehalt des verstärkenden Laminats (5) 40 bis 65% Gew./Gew. ausmacht.

3. Behälter nach Anspruch 1 oder 2, dadurch gekennzeichnet, daß die Lagen (8, 9) aus Glasfasergewebe Leinenbindung aufweisen.

4. Behälter nach Anspruch 3, dadurch gekennzeichnet, daß eine Lage (8) aus Glasfasergewebe eine nominelle Stärke von 0,36 mm, ein Nominalgewicht von 332 g/m², 3,9 Kettfäden/10 mm und 3,9 Schußfäden/10 mm aufweist und die benachbarte Lage (9) aus Glasfasergewebe eine nominelle Stärke von 0,74 mm, ein Nominalgewicht von 386 g/m², 2,8 Kettfäden/10 mm und 2,8 Schußfäden/10 mm aufweist.

FIG.1

FIG.2